(19)

Europäisches Patentamt
European Patent Office
Office européen des brevets

(11) **EP 4 596 341 A2**

(12) **EUROPEAN PATENT APPLICATION**

(43) Date of publication:
06.08.2025 Bulletin 2025/32

(51) International Patent Classification (IPC):
**B60T 7/22** *(2006.01)* **B60W 30/09** *(2012.01)*
**B60W 30/095** *(2012.01)*

(21) Application number: 25173368.9

(22) Date of filing: 29.04.2025

(52) Cooperative Patent Classification (CPC):
**B60T 7/22; B60W 30/09; B60W 30/0953;**
B60T 2201/022; B60W 2554/802; B60W 2556/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.04.2024 CN 202410533852

(71) Applicant: **Shenzhen Horizon Robotics
Technology Co., Ltd.
Shenzhen, Guangdong 518052 (CN)**

(72) Inventor: **GUO, Haoran
Shenzhen, 518052 (CN)**

(74) Representative: **V.O.
P.O. Box 87930
2508 DH Den Haag (NL)**

(54) **ACTIVE SAFETY CONTROL METHOD AND APPARATUS FOR VEHICLE TRAVELING,
MEDIUM, AND DEVICE**

(57) Embodiments of the present disclosure disclose an active safety control method and apparatus for vehicle traveling, a medium, and a device. The method includes: determining a current ego vehicle state of a vehicle and a current obstacle state perceived by the vehicle; determining a target actuator response mode corresponding to the vehicle under a current speed; determining an active safety trigger state of the vehicle in the target actuator response mode based on the current ego vehicle state and the current obstacle state; and performing active safety control on the vehicle based on the active safety trigger state.

```
determining a current ego vehicle state of a vehicle and a current obstacle state    201
perceived by the vehicle

determining a target actuator response mode corresponding to the vehicle under a    202
current speed

determining, based on the current ego vehicle state and the current obstacle state, an    203
active safety trigger state of the vehicle in the target actuator response mode

performing active safety control on the vehicle based on the active safety trigger    204
state
```

**FIG. 2**

EP 4 596 341 A2

## Description

## TECHNICAL FIELD

The present disclosure relates to vehicle driving technologies, and in particular, to an active safety control method and apparatus for vehicle traveling, a medium, and a device.

## BACKGROUND

During traveling of a vehicle, in situations where a driver brakes too late, applies an insufficient braking force or even cannot take braking measures completely, an active safety control system of the vehicle (such as an automatic emergency braking system) needs to take active braking measures to help the driver avoid or reduce the occurrence of collisions and achieve active safety control of the vehicle. For triggering of an active safety function of the active safety control system, the selection of an appropriate trigger timing may improve the robustness of the active safety function. Premature triggering of the active safety function by the active safety control system easily causes unnecessary panic, distrust, and other adverse emotions to the driver, while delayed triggering of the active safety function by the active safety control system may result in a collision due to failure to safely stop by braking, causing certain injuries to the driver. In the related art, whether to trigger the active safety function is typically determined through a time-to-collision (TTC) model. The TTC model is overly reliant on a manually calibrated safety time threshold. A poor calibration result is prone to cause an inappropriate trigger timing of the active safety function, easily leading to the above adverse consequences.

## SUMMARY

To resolve the foregoing technical problems, embodiments of the present disclosure provide an active safety control method and apparatus for vehicle traveling, a medium, and a device, to improve timeliness and effectiveness of triggering an active safety function, and further enhance user experience.

According to a first aspect of the present disclosure, there is provided an active safety control method for vehicle traveling, including: determining a current ego vehicle state of a vehicle and a current obstacle state perceived by the vehicle; determining a target actuator response mode corresponding to the vehicle under a current speed; determining, based on the current ego vehicle state and the current obstacle state, an active safety trigger state of the vehicle in the target actuator response mode; and performing active safety control on the vehicle based on the active safety trigger state.

According to a second aspect of the present disclosure, there is provided an active safety control apparatus for vehicle traveling, including: a first processing module, configured for determining a current ego vehicle state of a vehicle and a current obstacle state perceived by the vehicle; a second processing module, configured for determining a target actuator response mode corresponding to the vehicle under a current speed; a third processing module, configured for determining, based on the current ego vehicle state and the current obstacle state, an active safety trigger state of the vehicle in the target actuator response mode; and a control module, configured for performing active safety control on the vehicle based on the active safety trigger state.

According to a third aspect of the present disclosure, there is provided a non-transitory computer readable storage medium, on which a computer program is stored, wherein the computer program, when executed by a processor, causes the processor to implement the active safety control method for vehicle traveling according to any one of the foregoing embodiments of the present disclosure.

According to a fourth aspect of the present disclosure, there is provided an electronic device. The electronic device includes a processor; and a memory configured for storing instructions executable by the processor. The processor is configured for reading the executable instructions from the memory and executing the instructions to implement the active safety control method for vehicle traveling according to any one of the foregoing embodiments of the present disclosure.

According to a fifth aspect of the present disclosure, there is provided a computer program product, where instructions in the computer program product, when executed by a processor, causes the processor to implement the active safety control method for vehicle traveling provided in any one of the foregoing embodiments of the present disclosure.

Based on the active safety control method and apparatus for vehicle traveling, the medium, and the device provided in the foregoing embodiments of the present disclosure, the active safety trigger state may be determined from a current comprehensive multi-dimensional perspective of the vehicle based on the target actuator response mode, the current ego vehicle state, and the current obstacle state of the vehicle at the current speed, it may be ensured that the vehicle may trigger the active safety function at a best timing, so as to not only avoid or reduce negative emotions caused to occupants by premature triggering of the active safety function, but also avoid or reduce injuries caused to the occupants by a collision accident resulting from delayed triggering of the active safety function, thereby improving the driving safety of the vehicle.

## BRIEF DESCRIPTION OF DRAWINGS

FIG. 1 illustrates an exemplary application scenario of an active safety control method for vehicle traveling according to the present disclosure;

FIG. 2 is a schematic flowchart illustrating an active safety control method for vehicle traveling according to an exemplary embodiment of the present disclosure;

FIG. 3 is a schematic flowchart illustrating an active safety control method for vehicle traveling according to another exemplary embodiment of the present disclosure;

FIG. 4 is a schematic flowchart illustrating obtaining of a target actuator response mode according to an exemplary embodiment of the present disclosure;

FIG. 5 is a schematic flowchart illustrating obtaining of a target actuator response mode according to another exemplary embodiment of the present disclosure;

FIG. 6 is a schematic flowchart illustrating an active safety control method for vehicle traveling according to still another exemplary embodiment of the present disclosure;

FIG. 7 is a schematic flowchart illustrating an active safety control method for vehicle traveling according to yet another exemplary embodiment of the present disclosure;

FIG. 8 is a schematic diagram illustrating an actuator response mode according to an exemplary embodiment of the present disclosure;

FIG. 9 is a flow block diagram illustrating an active safety control method for vehicle traveling according to an exemplary embodiment of the present disclosure;

FIG. 10 is a flow block diagram illustrating recording of a response sample according to an exemplary embodiment of the present disclosure;

FIG. 11 is a flow block diagram illustrating fitting of an actuator response mode according to an exemplary embodiment of the present disclosure;

FIG. 12 is a flow block diagram illustrating determining of an active safety trigger state according to an exemplary embodiment of the present disclosure;

FIG. 13 is a schematic diagram illustrating a structure of an active safety control apparatus for vehicle traveling according to an exemplary embodiment of the present disclosure;

FIG. 14 is a schematic diagram illustrating a structure of an active safety control apparatus for vehicle traveling according to another exemplary embodiment of the present disclosure; and

FIG. 15 is a diagram illustrating a structure of an electronic device according to an embodiment of the present disclosure.

## DETAILED DESCRIPTION OF THE EMBODIMENTS

To explain the present disclosure, exemplary embodiments of the present disclosure are described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

## Overview of Disclosure

In a process of realizing the present disclosure, the inventors found that, during traveling of a vehicle, when a driver brakes too late, applies an insufficient braking force, or even cannot take braking measures completely, an active safety control system of the vehicle (such as an automatic emergency braking system) needs to take active braking measures to help the driver avoid or reduce the occurrence of collisions and achieve active safety control during traveling of the vehicle. For triggering of an active safety function of the active safety control system, the selection of an appropriate trigger timing may improve the robustness of the active safety function. Premature triggering of the active safety function by the active safety control system easily causes unnecessary panic, distrust, and other adverse emotions to the driver, while delayed triggering of the active safety function by the active safety control system may result in a collision due to failure to safely stop by braking, causing certain injuries to the driver. In the related art, whether to trigger the active safety function is typically determined through a TTC model. The TTC model may refer to an automatic brake assist system based on collision time. Specifically, collision time between an ego vehicle and an obstacle is calculated and the collision time is compared with a safety time threshold, where when the collision time is less than the safety time threshold, the system may trigger the active safety function. For example, if the collision time is less than an alarm time threshold, the system may issue an alarm prompt, and if the collision time is less than the collision time threshold, the system may trigger active braking. However, the TTC model is overly reliant on a manually calibrated safety time threshold. A poor calibration result is prone to cause an inappropriate trigger timing of the active safety function, easily leading to the foregoing adverse consequences.

## Exemplary Overview

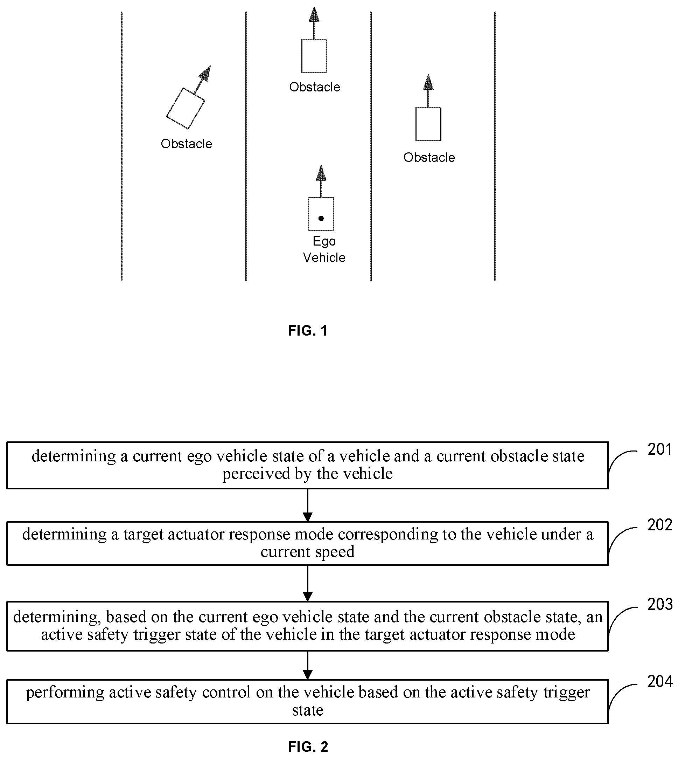

FIG. 1 illustrates an exemplary application scenario of an active safety control method for vehicle traveling according to the present disclosure. As shown in FIG. 1, during traveling of a vehicle (an ego vehicle), there may be obstacles around the ego vehicle, where the obstacles may include other vehicles, pedestrians, cyclists, and the like. By the active safety control method for vehicle traveling according to the present disclosure, a current ego vehicle state of the vehicle and a current obstacle state perceived by the vehicle may be determined, and a target actuator response mode of the vehicle under a current speed may be determined. Furthermore, an active safety trigger state of the vehicle in the target actuator response mode may be determined based on the current ego vehicle state and the current obstacle state, and active safety control may be performed on the vehicle based on the active safety trigger state. Since the active safety trigger state may be determined from a current comprehensive multi-dimensional perspective of the vehicle based on the target actuator response mode, the current ego vehicle state, and the current obstacle state of the vehicle at the current speed, it may be ensured that the vehicle may trigger the active safety function at a best timing, so as to not only avoid or reduce negative emotions caused to occupants by premature triggering of the active safety function, but also avoid or reduce injuries caused to the occupants by a collision accident resulting from delayed triggering of the active safety function, thereby improving the driving safety of the vehicle.

**Exemplary Method**

FIG. 2 is a schematic flowchart illustrating an active safety control method for vehicle traveling according to an exemplary embodiment of the present disclosure. This embodiment may be applied to an electronic device, specifically, for example, a vehicle-mounted computing platform. As shown in FIG. 2, the method of this embodiment of the present disclosure may include the following steps:
Step 201: determining a current ego vehicle state of a vehicle and a current obstacle state perceived by the vehicle.
The current ego vehicle state may include a position, a speed, an acceleration, a yaw angle, an angular velocity, a driving curvature, and other states of an ego vehicle. The current obstacle state may include a type, a position, a speed, an acceleration, a yaw angle, an angular velocity, and other perceived states of an obstacle.
In some optional embodiments, the current ego vehicle state may be obtained from data acquired by a sensor for acquiring ego vehicle information in the vehicle. For example, the current ego vehicle state of the vehicle may be determined through data acquired by an inertial measurement unit and a global positioning system (GPS) in the vehicle. The current obstacle state may be obtained from sensor data acquired by a perception sensor in the vehicle. The perception sensor may include, for example, a camera, a laser radar, a millimeter wave radar, and the like. Specifically, the current obstacle state may be determined by perception algorithms or perception models such as target detection, semantic segmentation, and target classification based on the sensor data acquired by the perception sensor.
Step 202: determining a target actuator response mode corresponding to the vehicle under a current speed.
The current speed may be obtained from the current ego vehicle state.
In some optional embodiments, an actuator response mode (also referred to as an actuator response model) may refer to a mode corresponding to a response curve (or referred to as a response characteristic) used for describing an actuator response process of the vehicle. The actuator response mode may include, for example, a two-phase mode, a three-phase mode, or other modes. For the three-phase mode as an example, the actuator response mode may include three phases: a delay phase, a pressure-building phase, and a pressure-holding phase. Different types of actuator response modes may be described by different parameters. For example, description parameters for a three-phase actuator response mode may include a delay time for the delay phase, a pressure-building rate for the pressure-building phase, and an average deceleration for the pressure-holding phase. The response characteristic of the vehicle actuator varies at different speeds. Therefore, different speeds may correspond to different description parameters, or different speed sections may correspond to different description parameters. In this case, an actuator response mode corresponding to the vehicle at the current speed may be determined based on the current speed of the vehicle during traveling of the vehicle, and may be referred to as the target actuator response mode.
In some optional embodiments, actuator response modes corresponding to the vehicle at different speeds may be determined and stored based on actual historical actuator response data (which may be referred to as a response sample) at the different speeds during traveling of the vehicle. Then, in a current time frame, the target actuator response mode corresponding to the current speed may be obtained, based on the current speed of the vehicle, from the stored actuator response modes corresponding to the different speeds. In this case, as the vehicle travels, new response samples may be continuously accumulated, and actuator response modes at various speeds may be continuously optimized and updated.
In some optional embodiments, after the current speed is determined, historical actuator response data conforming to a current speed condition before the current time frame may be obtained in real time based on the current speed, and the target actuator response mode corresponding to the current speed may be determined in real time.
Step 203: determining, based on the current ego vehicle state and the current obstacle state, an active safety trigger state of the vehicle in the target actuator response mode.
The active safety trigger state may include triggered and non-triggered states. "Triggered" means that it is determined that an active safety function of the vehicle needs to be triggered against an obstacle currently, in other words, it is a trigger timing of the active safety function against the obstacle currently. "Non-triggered" means that it is determined that the active safety function of the vehicle does not need to be triggered against the obstacle currently, in other words, it is not the trigger timing of the active safety function against the obstacle currently.

In some optional embodiments, a minimum distance between the vehicle and the obstacle in a braking process in which the vehicle starts to brake from the current ego vehicle state may be predicted based on the target actuator response mode, and the active safety trigger state may be determined based on a relationship between the minimum distance and a safety distance threshold. If the minimum distance is less than the safety distance threshold, the active safety trigger state may be determined as "triggered"; otherwise, the active safety trigger state may be determined as "non-triggered".

In some optional embodiments, the current obstacle state may include current obstacle states respectively corresponding to one or more obstacles. In this case, for each obstacle, an active safety trigger state corresponding to the obstacle may be determined according to the method of embodiments of the present disclosure.

In some optional embodiments, a target obstacle conforming to a certain risk condition may be screened out from perceived obstacles, and an active safety trigger state represents determined based on a current obstacle state of the target obstacle and the current ego vehicle state according to the method of embodiments of the present disclosure.

Step 204: performing active safety control on the vehicle based on the active safety trigger state.

If the active safety trigger state represents "triggered", the vehicle may be controlled to perform active braking at a preset deceleration, and an alarm signal may be output to alert occupants in the vehicle. If the active safety trigger state represents "non-triggered", a wait may continue until processing in a next time frame is performed.

According to the active safety control method for vehicle traveling provided in this embodiment, during traveling of the vehicle, the active safety trigger state may be determined from a current comprehensive multi-dimensional perspective of the vehicle based on the target actuator response mode, the current ego vehicle state, and the current obstacle state of the vehicle at the current speed, and it may be ensured that the vehicle may trigger the active safety function at a best timing, so as to not only avoid or reduce negative emotions caused to occupants by premature triggering of the active safety function, but also avoid or reduce injuries caused to the occupants by a collision accident resulting from delayed triggering of the active safety function, thereby improving the driving safety of the vehicle.

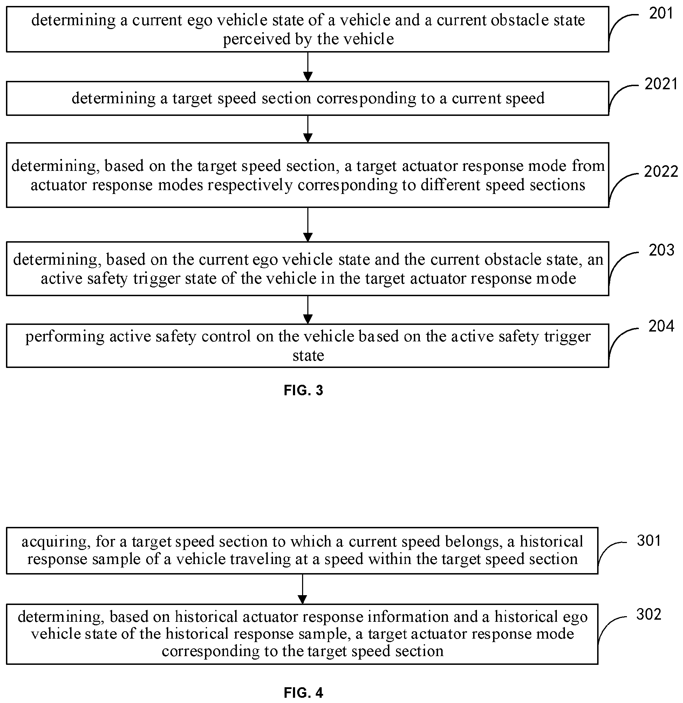

FIG. 3 is a schematic flowchart illustrating an active safety control method for vehicle traveling according to another exemplary embodiment of the present disclosure.

In some optional embodiments, as shown in FIG. 3, the determining a target actuator response mode corresponding to the vehicle under a current speed in step 202 may include:

Step 2021: determining a target speed section corresponding to the current speed.

The speed section may refer to a speed range or a speed segment. An overall range of speeds at which the vehicle may travel may be divided into a plurality of speed sub-ranges by a preset speed interval, and each speed sub-range is referred to as a speed section. For example, the overall range of speeds at which the vehicle may travel is 0-200 kph (km/h), and is divided by a speed interval of 10 kph, to obtain 20 speed sections: 0-10 kph, 10-20 kph, 20-30 kph, ..., and 190-200 kph. A specific speed interval is not limited. According to a matching relationship between the current speed and respective speed sections, a target speed section corresponding to the current speed may be determined.

Step 2022: determining, based on the target speed section, the target actuator response mode from actuator response modes respectively corresponding to different speed sections.

The actuator response modes respectively corresponding to the different speed sections may be obtained in any time frame before the current time frame. Matching may be performed between the target speed section and the respective speed sections to determine a speed section corresponding to the target speed section, to further obtain an actuator response mode corresponding to the target speed section based on the obtained actuator response modes respectively corresponding to the different speed sections.

In some optional embodiments, the obtained actuator response modes respectively corresponding to the different speed sections may be modes optimized and updated based on the latest response samples generated at different speeds during traveling of the vehicle, to further improve the accuracy of the determined active safety trigger state.

In this embodiment, actuator response modes respectively corresponding to different speed sections are obtained before the current time frame, and the target actuator response mode corresponding to the current speed may be quickly determined based on the target speed section to which the current speed belongs in the current time frame, so that the real-time performance of the active safety trigger state may be effectively improved.

FIG. 4 is a schematic flowchart illustrating obtaining of a target actuator response mode according to an exemplary embodiment of the present disclosure.

In some optional embodiments, as shown in FIG. 4, a target actuator response mode may be obtained by the following steps:

Step 301: acquiring, for a target speed section to which a current speed belongs, a historical response sample of a vehicle traveling at a speed within the target speed section.

The historical response sample may include historical actuator response information and a historical ego vehicle state. The historical actuator response information may include response information of an actuator during traveling of the vehicle before a current time frame. The historical ego vehicle state represents similar to a current ego vehicle state. There may be one or more historical response samples. For each of the historical response samples, the historical actuator response information may include an actuator response trigger timestamp (namely, response start time or a response start frame), response end time (or a response end frame), actuator response duration, an actuator overshoot amount, an actuator stability amount, an actuator response speed, braking time in a response process, and the like. The actuator response duration may be duration from requesting to trigger an active safety function to the response start time of the actuator. The actuator overshoot amount may refer to a part that an execution result of the actuator exceeds a requested amount (namely, a requested deceleration). For example, if a requested deceleration for triggering of the active safety function is -5 meters per square second and a minimum value of the execution result of the actuator is -6 meters per square second, the execution result of the actuator exceeds the requested amount, and it may be determined that the actuator overshoot amount is (-6) - (-5) = -1. The actuator stability amount may refer to a stability amount of a deceleration after the actuator performs a braking action. For example, if a deceleration of the actuator performing the braking action is stable at -4.9 meters per square second, it may be determined that the actuator stability amount is -4.9 meters per square second. The actuator response speed may be duration from the response start frame to a time when a deceleration of the actuator reaching the requested deceleration. For example, if braking is requested to be performed at a preset deceleration (namely, the requested deceleration) at a time t1, the actuator starts to respond at a time t2, and a deceleration of the vehicle reaches the requested deceleration at a time t3, the actuator response speed is t3 - t2. The braking time in the response process may refer to duration from the response start time to the response end time.

In some optional embodiments, response information of the actuator and an ego vehicle state in the actuator response process may be recorded in real time as response samples during traveling of the vehicle. In this case, in the current time frame, response samples recorded before the current time frame may be used as the historical response samples. Historical response samples corresponding to the speed in the target speed section is obtained from the historical response samples.

Step 302: determining, based on the historical actuator response information and the historical ego vehicle state of the historical response sample, the target actuator response mode corresponding to the target speed section.

In some optional embodiments, a target actuator response mode that may characterize an actuator response characteristic of the target speed section may be derived by fitting based on the historical actuator response information and the historical ego vehicle state of the historical response sample. In other words, optimal description parameters for actuator response modes for the target speed section is determined based on the historical actuator response information and the historical ego vehicle state of the historical response samples, and the target actuator response mode is obtained based on the optimal description parameter.

In this embodiment, since the historical response samples may reflect actuator response behavior and an actual ego vehicle state in the response process during actual traveling of the vehicle, the obtained target actuator response mode for the target speed section may effectively characterize an actuator response behavior of the vehicle in the target speed section, so that the accuracy and the robustness of the actuator response mode may be improved.

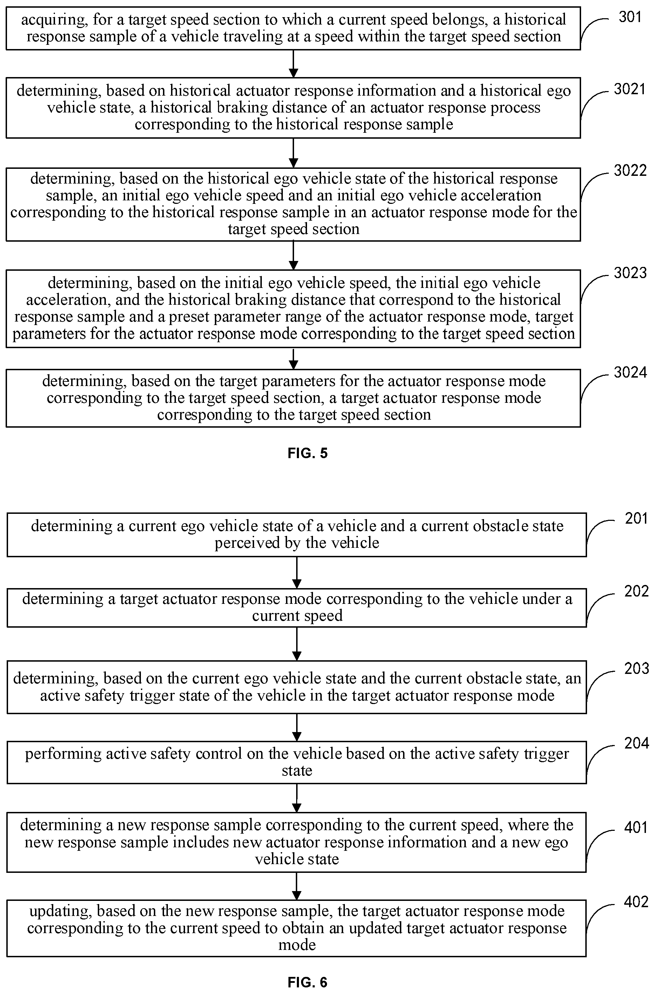

FIG. 5 is a schematic flowchart illustrating obtaining of a target actuator response mode according to another exemplary embodiment of the present disclosure.

In some optional embodiments, as shown in FIG. 5, the determining, based on the historical actuator response information and the historical ego vehicle state of the historical response sample, the target actuator response mode corresponding to the target speed section in step 302 may include:

Step 3021: determining, based on the historical actuator response information and the historical ego vehicle state, a historical braking distance of an actuator response process corresponding to the historical response sample.

For any historical response sample, a historical braking distance corresponding to the historical response sample may be calculated based on historical actuator response information and a historical ego vehicle state in the historical response sample. Specifically, an initial state of the vehicle in the actuator response process may be determined based on the historical ego vehicle state, and further the historical braking distance of the actuator response process may be calculated based on the initial state in combination with the historical actuator response information such as actuator response duration, an actuator response speed, braking time, and the like in the response process.

Step 3022: determining, based on the historical ego vehicle state of the historical response sample, an initial ego vehicle speed and an initial ego vehicle acceleration corresponding to the historical response sample in an actuator response mode for the target speed section.

The initial ego vehicle speed and the initial ego vehicle acceleration are a starting speed and astarting acceleration of the historical response sample entering the actuator response process. An ego vehicle speed corresponding to a response start timestamp may be extracted as the initial ego vehicle speed from the historical ego vehicle state, and an ego vehicle acceleration corresponding to the response start timestamp may be extracted as the initial ego vehicle acceleration from the historical ego vehicle state. It can be understood that the actuator response mode for a target speed section may correspond to one or more historical response samples, where for each historical response sample, a corresponding initial ego vehicle speed and a corresponding initial ego vehicle acceleration may be determined.

It should be noted that step 3021 and step 3022 may not be performed in sequence.

Step 3023: determining, based on the initial ego vehicle speed, the initial ego vehicle acceleration, and the historical braking distance that correspond to the historical response sample and a preset parameter range of the actuator response mode, target parameters for the actuator response mode corresponding to the target speed section.

The preset parameter range may refer to a parameter value range of description parameters for describing the actuator response mode. For the foregoing three-phase actuator response mode as an example, the preset parameter range may include a parameter value range of the delay time for the delay phase, a parameter value range of the pressure-building rate for the pressure-building phase, and a parameter value range of the average deceleration for the pressure-holding phase. A specific preset parameter range is not limited.

In some optional embodiments, any feasible search optimization manner may be adopted to search for optimal target parameters from the preset parameter range. The historical braking distance is used for constructing an optimization target with a fitted braking distance under a parameter obtained by searching in the searching process, to guide updating of the parameter, so that the fitted braking distance under the searching-based obtained parameter continuously approaches the historical braking distance, and optimal target parameters closest to the historical braking distance is obtained. The search optimization manner may include, for example, a least squares method, a simulated annealing method, a gradient descent method, a dynamic programming method, and the like.

Step 3024: determining, based on the target parameters for the actuator response mode corresponding to the target speed section, the target actuator response mode corresponding to the target speed section.

The target parameters are parameters for the actuator response mode. After the target parameters are obtained, the target parameters are configured into a corresponding parameter entry of the actuator response mode so that the target actuator response mode corresponding to the target speed section may be obtained.

In this embodiment, the historical braking distance of the actuator response process corresponding to the historical response sample is determined, to guide the search for an optimal parameter for the actuator response mode, so that optimal target parameters corresponding to the target speed section may be determined from the preset parameter range, and an optimal target actuator response mode may be effectively obtained. In this way, the target actuator response mode may better characterize an actual response characteristic of an actuator in the target speed section, and further the target actuator response mode is used for determining an active safety trigger state of a vehicle, thereby further improving the accuracy and the effectiveness of the active safety trigger state.

In some optional embodiments, the determining, based on the initial ego vehicle speed, the initial ego vehicle acceleration, and the historical braking distance that correspond to the historical response sample and a preset parameter range of the actuator response mode, target parameters for the actuator response mode corresponding to the target speed section in step 3023 may include: determining the target parameters for the actuator response mode corresponding to the target speed section based on the initial ego vehicle speed, the initial ego vehicle acceleration, and the historical braking distance that correspond to the historical response sample and through performing searching within the preset parameter range by a least squares method,.

The fitted braking distance corresponding to the historical response sample may be calculated based on an actuator response mode determined by the searching-based obtained parameter, an objective function of the least squares method may be constructed based on the fitted braking distance and the historical braking distance, and a value of the objective function is minimized, so that optimal target parameters corresponding to the target speed section is be determined.

In this embodiment, the optimal target parameters may be effectively determined through performing searching within the preset parameter range by the least squares method. Due to the simplicity and ease of implementation of the least squares method, the optimal target parameters may be quickly obtained and the processing efficiency is improved.

In some optional embodiments, the determining, based on the initial ego vehicle speed, the initial ego vehicle acceleration, and the historical braking distance that correspond to the historical response sample and through performing searching within the preset parameter range by a least squares method, the target parameters for the actuator response mode corresponding to the target speed section may include:
for a current-searching-based obtained parameter, determining, based on the initial ego vehicle speed and the initial ego vehicle acceleration that correspond to the historical response sample, a fitted braking distance corresponding to the historical response sample under the current-searching-based obtained parameter; and determining, based on the historical braking distance and the fitted braking distance that correspond to the historical response sample and the current-searching-based obtained parameter, the target parameters for the actuator response mode corresponding to the target speed section.

The current-searching-based obtained parameter may be a parameter obtained after updating by a previous optimization iteration. If the current searching is the first searching, the current-searching-based obtained parameter may be an initialized parameter. The fitted braking distance corresponding to the historical response sample under the current-searching-based obtained parameter may refer to a braking distance of a response process, under the historical ego vehicle state of the historical response sample, in which the actuator responds based on a current actuator response mode determined by the current-searching-based obtained parameter. Specifically, the current-searching-based obtained parameter may be configured into the corresponding parameter entry of the actuator response mode to obtain the current actuator response mode; and a braking action is performed based on the current actuator response mode, and an ego vehicle braking distance at the end of the response is fitted to obtain the fitted braking distance. After the fitted braking distance is obtained, the target parameters for the actuator response mode corresponding to the target speed section may be determined based on the historical braking distance and the fitted braking distance that correspond to the historical response sample and the current-searching-based obtained parameter. Specifically, whether an error between the fitted braking distance under the current-searching-based obtained parameter and the historical braking distance may satisfy an end condition of the optimization iteration may be determined. If the end condition is satisfied, the current-searching-based obtained parameter may be used as the target parameters. If the end condition is not satisfied, the current-searching-based obtained parameter may be updated based on the error between the historical braking distance and the fitted braking distance, and further the iteration continues based on the updated parameter according to the foregoing process until the end condition is satisfied and the optimal target parameters are obtained.

In this embodiment, in the searching process, the fitted braking distance corresponding to the historical response sample under the current-searching-based obtained parameter may be determined based on the current-searching-based obtained parameter, to help calculate the error between the fitted braking distance and the historical braking distance, guide an update of the parameter in an optimization process, and realize continuous optimization of the parameter, so that the optimal target parameters may be effectively obtained.

In some optional embodiments, the determining, based on the initial ego vehicle speed and the initial ego vehicle acceleration that correspond to the historical response sample, a fitted braking distance corresponding to the historical response sample under the current-searching-based obtained parameter may include:

determining, based on the current-searching-based obtained parameter, a current delay time in a delay phase, a current pressure-building rate in a pressure-building phase, and a current average deceleration in a pressure-holding phase of the actuator response process; determining, based on the initial ego vehicle speed and the initial ego vehicle acceleration that correspond to the historical response sample, the current delay time, the current pressure-building rate, and the current average deceleration, a first braking distance in the delay phase, a second braking distance in the pressure-building phase, and a third braking distance in the pressure-holding phase of the historical response sample; and determining, based on the first braking distance, the second braking distance, and the third braking distance, the fitted braking distance corresponding to the historical response sample under the current-searching-based obtained parameter.

The current-searching-based obtained parameter may include description parameters for the respective phases of the actuator response mode. Therefore, current parameters for the respective phases of the actuator response process may be determined based on the current-searching-based obtained parameter, where the current parameters includes the current delay time, the current pressure-building rate, and the current average deceleration. Braking distances of the respective phases may be calculated based on kinematics models of the respective phases. The braking distances of the respective phases are synthesized, to obtain the fitted braking distance of the response process.

In some optional embodiments, the delay time may be represented by *delay* (where a unit may be "second"), the pressure-building rate may be represented by *jerk* (where a unit may be "meters per cubic second"), and the average deceleration may be represented by *decel* (where a unit may be "meters per square second"). The initial ego vehicle speed may be represented by $v_0$, the initial ego vehicle acceleration may be represented by $a_0$, and a first braking distance $d_1$ in the delay phase may be expressed by:

$$d_1 = v_0 * delay + 0.5 * a_0 * delay^2$$

At the end of the delay phase, a speed $v_1$ and an acceleration $a_1$ of the ego vehicle may be expressed by:

$$v_1 = v_0 + a_0 * delay$$

$$a_1 = a_0$$

A second braking distance $d_2$ in the pressure-building phase may be expressed by:

$$d_2 = v_1 * t_1 + 0.5 * a_1 * t_1{}^2 + \frac{1}{6} * jerk * t_1{}^3$$

$$t_1 = decel/jerk$$

where $t_1$ denotes duration to reach the average deceleration **decel** during pressure building.

At the end of the pressure-building phase, a speed $v_2$ and an acceleration $a_2$ of the ego vehicle may be expressed by:

$$v_2 = v_1 * t_1 + 0.5 * jerk * t_1{}^2$$

$$a_2 = a_1 + jerk * t_1$$

A third braking distance $d_3$ in the pressure-holding phase may be expressed by:

$$d_3 = -\frac{(v_2^2)}{2 * decel}$$

$$t_2 = v2/decel$$

where $t_2$ denotes duration from the end of the pressure-building phase (in other words, the start of the pressure-holding phase) to stopping by braking.

In this case, a fitted braking distance **s** corresponding to the historical response sample under the current-searching-based obtained parameter may be represented by follows:

$$s = d_1 + d_2 + d_3$$

In some optional embodiments, the historical braking distance of the actuator response process corresponding to the historical response sample may be calculated in the following manners:

$$v(t) = \int_0^t a(t) * dt$$

$$heading(t) = \int_0^t yawrate(t) * dt$$

$$x_t = \int_0^t v(t) * \cos\big(heading(t)\big) * dt + e(t)$$

where **dt** denotes frame interval time, **a(t)** denotes a sampled ego vehicle acceleration, **v(t)** denotes an ego vehicle speed estimated based on the sampled ego vehicle acceleration, **yawrate(t)** denotes a sampled yaw rate (in other words, a change rate of a heading angle), **heading(t)** denotes a heading angle (also referred to as a yaw angle) estimated based on the sampled yaw rate, and **$x_t$** denotes an estimated braking distance (namely, the historical braking distance). **e(t)** denotes a process noise, and the process noise may be a Gaussian noise.

After the historical braking distance and the fitted braking distance that correspond to the historical response sample are obtained, the value of the objective function may be calculated based on the historical braking distance, the fitted braking distance, and the objective function, to further calculate an iteration step size based on the value of the objective function, and update the current-searching-based obtained parameter based on the iteration step size, so that a new-searching-based obtained parameter is obtained. Further, the new-searching-based obtained parameter may be used as a current-searching-based obtained parameter, and the searching may continue based on the foregoing process until an iteration end condition is satisfied, and a final-searching-based obtained parameter may be used as the target parameters. The iteration step size may be determined by any feasible gradient descent method. The gradient descent method may include, for example, a random gradient descent method, a Newton method, a Gaussian-Newton method, and the like. The objective function may be expressed by:

$$minJ = \sum_{i=1}^{n}(s_i - x_{ti})^2$$

where **i** denotes an **$i^{th}$** historical response sample, **n** denotes the sample number of historical response samples, **$s_i$** denotes a fitted braking distance of an **$i^{th}$** historical response sample, and **$x_{ti}$** denotes a historical braking distance of an **$i^{th}$** historical response sample. Based on the minimization of the objective function, the searching is performed for the optimal target parameters within the preset parameter range, and the target actuator response mode corresponding to the target speed section is obtained based on the target parameters.

In this embodiment, the fitted braking distance of the historical response sample is calculated through the three-phase actuator response model, to calculate the error relative to the historical braking distance, so as to guide the searching of parameters and effectively obtain the optimal parameter.

FIG. 6 is a schematic flowchart illustrating an active safety control method for vehicle traveling according to still another exemplary embodiment of the present disclosure.

In some optional embodiments, as shown in FIG. 6, after active safety control is performed on the vehicle based on an active safety trigger state, the following steps may be further included:

Step 401: determining a new response sample corresponding to a current speed, where the new response sample includes new actuator response information and a new ego vehicle state.

If the active safety trigger state represents "triggered", actuator response information (namely, the new actuator response information) and an ego vehicle state (namely, the new ego vehicle state) may be recorded in a subsequent process of triggering an active safety function, to obtain the new response sample corresponding to the current speed.

Step 402: updating, based on the new response sample, the target actuator response mode corresponding to the current speed to obtain an updated target actuator response mode.

The updating, based on the new response sample, the target actuator response mode corresponding to the current speed may refer to using the new response sample as a response sample of a target speed section to which the current speed belongs, and re-searching for an optimal parameter based on the foregoing optimization process and target parameters for the target actuator response mode to obtain an updated parameter, and further obtain an updated target actuator response mode based on the updated parameter.

In this embodiment, response samples may be continuously accumulated with the traveling of the vehicle, and actuator response modes in respective speed sections may be continuously updated. With the continuous accumulation of the response samples, the richness and diversity of the response samples may be improved, to further improve the accuracy and the robustness of the actuator response mode, so that an actuator response model used for determining the active safety trigger state each time is a current optimal model, and the accuracy of the active safety trigger state may be further improved, thereby triggering the active safety function at a better timing.

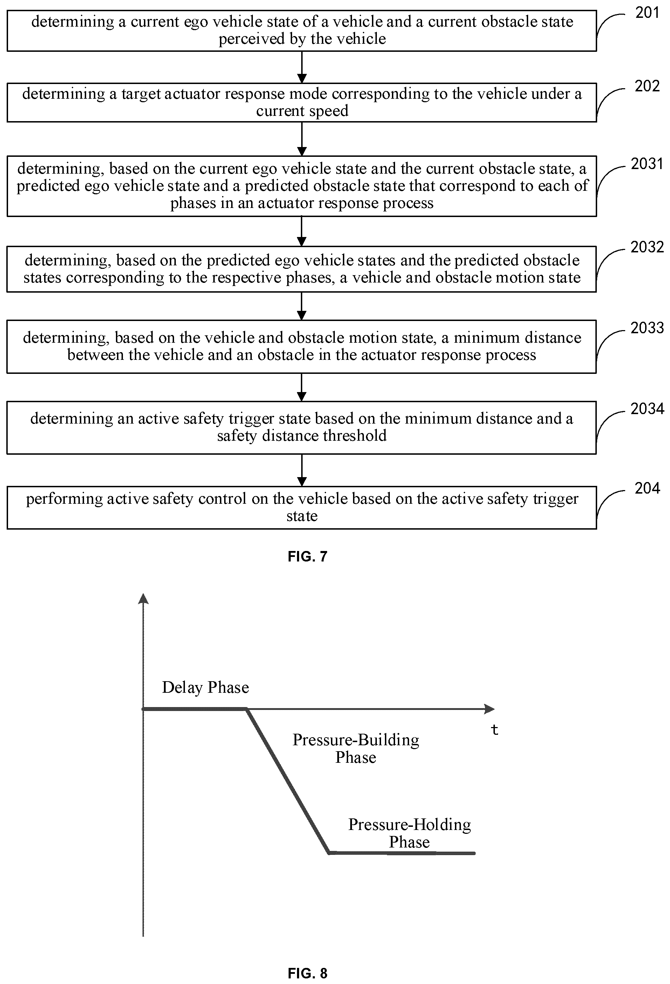

FIG. 7 is a schematic flowchart illustrating an active safety control method for vehicle traveling according to yet another exemplary embodiment of the present disclosure.

In some optional embodiments, as shown in FIG. 7, the determining, based on the current ego vehicle state and the current obstacle state, an active safety trigger state of the vehicle in the target actuator response mode in step 203 may include the following steps:

Step 2031: determining, based on the current ego vehicle state and the current obstacle state, a predicted ego vehicle state and a predicted obstacle state that correspond to each of phases in the actuator response process.

The predicted ego vehicle state may include an ego vehicle future speed, an ego vehicle future deceleration, an ego vehicle future position, and the like, that correspond to the ego vehicle in each of the phases of the response process. The predicted obstacle state may include an obstacle future distance and an obstacle future speed that are relative to the ego vehicle, and the like.

In some optional embodiments, the predicted ego vehicle state and the foregoing ego-vehicle-related states such as the current ego vehicle state and the historical ego vehicle state may refer to states of the ego vehicle in a global coordinate system. The global coordinate system may be, for example, a world coordinate system, a local coordinate system of the ego vehicle at an initial position, and the like. The predicted obstacle state may refer to states of an obstacle in the local coordinate system of the ego vehicle.

In some optional embodiments, a predicted ego vehicle state corresponding to any phase may include states of the ego vehicle at respective trajectory points in a predicted trajectory in the phase. The predicted obstacle state may include obstacle states corresponding to the respective trajectory points of the ego vehicle. In other words, each phase may correspond to one or more trajectory points, and an ego vehicle state and an obstacle state at each trajectory point may be predicted.

Step 2032: determining, based on the predicted ego vehicle states and the predicted obstacle states corresponding to the respective phases, a vehicle and obstacle motion state.

The vehicle and obstacle motion state may include the following states where the vehicle and the obstacle are both stationary, the vehicle and the obstacle are both moving, the vehicle is stationary while the obstacle is moving, the vehicle is moving while the obstacle is stationary. The vehicle and the obstacle being both moving may include the following states where the vehicle accelerates while the obstacle decelerates, the vehicle decelerates while the obstacle accelerates, the vehicle and the obstacle both decelerates, the vehicle and the obstacle both accelerates, and so on.

In some optional embodiments, a motion state of the vehicle may be determined based on the predicted ego vehicle state, and the motion state of the vehicle may include two states where the vehicle is stationary and the vehicle is moving. A motion state of the obstacle may be determined based on the motion state of the vehicle in combination of the predicted obstacle state, and the motion state of the obstacle may include two states where the obstacle is stationary and the obstacle is moving. Further, the vehicle and obstacle motion state is determined based on the motion state of the vehicle in combination with the motion state of the obstacle. For example, if the motion state of the vehicle is "stationary", and that the obstacle is determined to be stationary relative to the vehicle based on the predicted obstacle state, it may be determined that the vehicle and obstacle motion state is "both stationary". If the motion state of the vehicle is "stationary", and the obstacle is moving relative to the vehicle, it may be determined that the vehicle and obstacle motion state represents that the vehicle is stationary while the obstacle is moving. If the motion state of the vehicle is "moving", and the obstacle is stationary relative to the vehicle, it may be determined that the vehicle and obstacle motion state is "both moving". If the motion state of the vehicle is "moving", and the obstacle is moving relative to the vehicle, it may be determined, based on specific speeds, accelerations, and heading angles of the vehicle and the obstacle, that the vehicle and obstacle motion state is "both moving" or that the vehicle is moving while the obstacle is stationary. A relative motion direction between the ego vehicle and the obstacle may alternatively be determined based on the predicted ego vehicle state and the predicted obstacle state.

Step 2033: determining, based on the vehicle and obstacle motion state, a minimum distance between the vehicle and an obstacle in the actuator response process.

The minimum distance between the vehicle and the obstacle in the actuator response process may refer to a minimum distance between the vehicle and the obstacle in a process in which the vehicle brakes based on the target actuator response mode.

In some optional embodiments, the minimum distance between the vehicle and the obstacle may be determined based on the vehicle and obstacle motion state, the predicted ego vehicle state, and the predicted obstacle state.

Step 2034: determining the active safety trigger state based on the minimum distance and a safety distance threshold.

The safety distance threshold may be set based on actual statuses such as a vehicle size and vehicle performance, and is not described in detail. If the minimum distance is less than the safety distance threshold, the active safety trigger state may be determined as "triggered"; otherwise, the active safety trigger state may be determined as "non-triggered".

In this embodiment, since the predicted ego vehicle state is obtained based on an actual actuator response mode of the vehicle under a current speed, actual response characteristics of the actuator of the vehicle are comprehensively considered, so that the calculated minimum distance is more accurate and reliable, and the accuracy of a trigger timing of an active safety function may be further improved.

In some optional embodiments, an occurrence timing of the minimum distance may be determined based on the vehicle and obstacle motion state. The occurrence timing of the minimum distance may include a case of the minimum distance occurred when the ego vehicle stops by braking, a case of the minimum distance occurred when the ego vehicle and the obstacle reach the same speed, and other cases. Furthermore, the minimum distance between the vehicle and the obstacle in the actuator response process may be determined based on the occurrence timing of the minimum distance.

In some optional embodiments, if the vehicle and obstacle motion state represents that the vehicle decelerates while the obstacle is at a uniform speed or accelerates, and a current speed of the vehicle is greater than a current speed of the obstacle, it may be determined that the distance between the vehicle and the obstacle when the vehicle and the obstacle reach the same speed is minimum. If the vehicle and obstacle motion state represents that the vehicle decelerates and the obstacle both decelerates, and a current speed of vehicle is greater than a current speed of the obstacle, it may be determined that the distance between the vehicle and the obstacle when the vehicle stops by braking is minimum. For the case of the distance between the vehicle and the obstacle under the same speed being minimum, the distance under the same speed may be determined as the minimum distance. For the case of the distance between the vehicle and the obstacle when stopping by braking being minimum, the distance when the vehicle stops by braking may be determined as the minimum distance.

According to this embodiment, the occurrence timing of the minimum distance may be determined based on a specific ego vehicle and obstacle motion state, so that the minimum distance between the vehicle and the obstacle may be determined based on the occurrence timing of the minimum distance, where the case of the distance under the same speed being minimum and the case of the distance when stopping by braking being minimum may be both considered, thereby effectively improving the accuracy of the minimum distance. Occurrence of a case in which an inaccurate active safety trigger state is caused by directly determining the active safety trigger state based on a distance when stopping by braking is avoided.

In some optional embodiments, FIG. 8 is a schematic diagram illustrating an actuator response mode according to an exemplary embodiment of the present disclosure. As shown in FIG. 8, for a three-phase mode as an example of the actuator response mode, a response process of the three-phase actuator may include a delay phase, a pressure-building phase, and a pressure-holding phase.

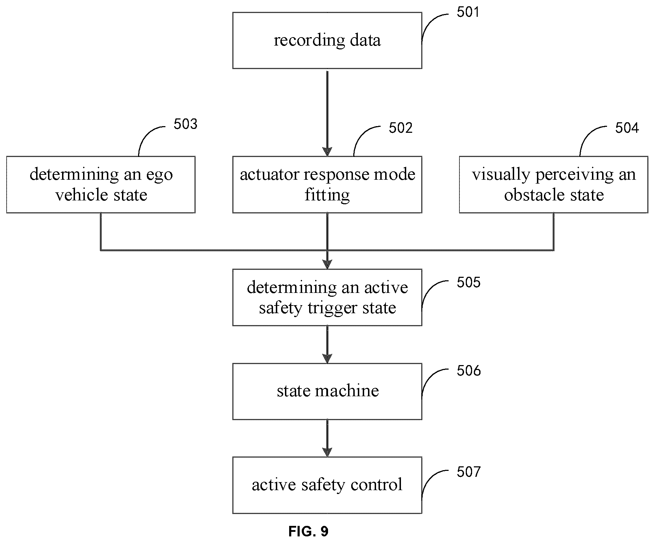

In some optional embodiments, FIG. 9 is a flow block diagram illustrating an active safety control method for vehicle traveling according to an exemplary embodiment of the present disclosure. As shown in FIG. 9, the method of this embodiment of the present disclosure may include the following steps:

Step 501: recording data. During traveling of the vehicle, actuator response information of the vehicle at different speeds and an ego vehicle state in an actuator response process are recorded, to obtain actuator response samples at the different speeds.

Step 502: performing actuator response mode fitting. Fitting is performed based on the recorded actuator response samples, to obtain actuator response modes for different speed sections.

Step 503: determining in real time an ego vehicle state, i.e., a current ego vehicle state.

Step 504: visually perceiving an obstacle state, that is, determining a current obstacle state.

Step 505: determining an active safety trigger state, that is, determining the active safety trigger state based on the current ego vehicle state, the current obstacle state, and the obtained actuator response modes for the different speed sections. Specifically, a current speed is determined based on the current ego vehicle state, and a target actuator response mode corresponding to the current speed is determined based on the current speed and the actuator response modes for the different speed sections, to further determine, based on the current ego vehicle state and the current obstacle state, the active safety trigger state of the vehicle in the target actuator response mode.

Step 506: managing, by a state machine, switching (shifting) of an active safety trigger state.

Step 507: performing active safety control. To be specific, when a state of the state machine shifts to a trigger state, a requested deceleration is issued to an actuator, to control the actuator to actively brake based on the requested deceleration.

In this embodiment, actual response samples of the vehicle at different speeds are obtained, and the actuator response modes corresponding to different speed sections are obtained through fitting, so that whether it is a best timing currently to trigger an active safety function may be determined in real time based on the ego vehicle state and the obstacle state in combination with an actuator response mode of an ego vehicle actuator at a real-time speed during traveling of the vehicle.

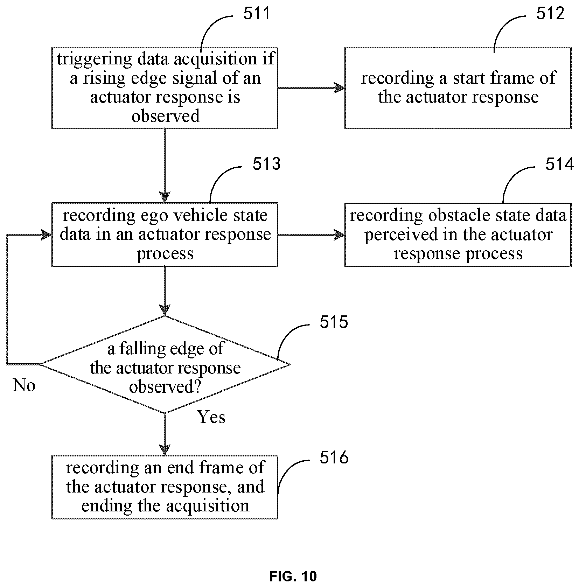

In some optional embodiments, FIG. 10 is a flow block diagram illustrating recording of a response sample according to an exemplary embodiment of the present disclosure. As shown in FIG. 10, a process of recording the response sample may include the following steps:

Step 511: triggering data acquisition if a rising edge signal of an actuator response is observed.

Step 512: recording a start frame of the actuator response, that is, recording start time of the actuator response.

Step 513: recording ego vehicle state data in an actuator response process. The ego vehicle state data may include one or more frames of ego vehicle states.

Step 514: recording obstacle state data perceived in the actuator response process. The obstacle state data may include one or more frames of obstacle states.

Step 515: determining whether a falling edge of the actuator response is observed, where if not, returning to step 513 to proceed with recording data.

Step 516: recording an end frame of the actuator response (in other words, end time of the actuator response) if the falling edge of the actuator response is observed, and ending the data acquisition of the current response process is ended.

In this embodiment, a response sample of a vehicle actuator may be acquired and recorded during vehicle traveling, to implement the accumulation of response samples, used for determining or updating an actuator response mode corresponding to the vehicle in each speed section, so that the accuracy and the robustness of the actuator response mode may be continuously improved.

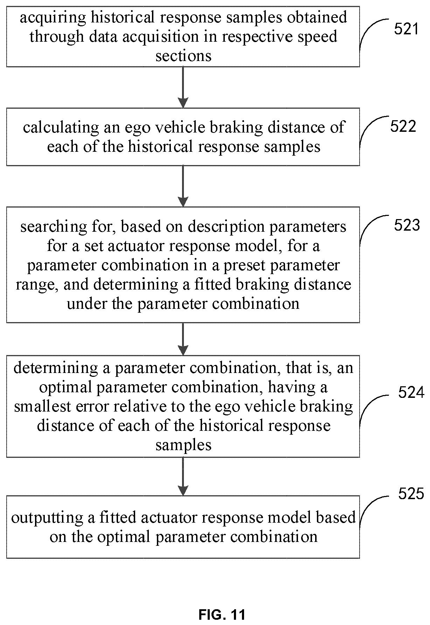

In some optional embodiments, FIG. 11 is a flow block diagram illustrating fitting of an actuator response mode according to an exemplary embodiment of the present disclosure. As shown in FIG. 11, a fitting process of an actuator response mode may include the following steps:

Step 521: acquiring historical response samples obtained through data acquisition in respective speed sections.

Step 522: calculating an ego vehicle braking distance (i.e., the forgoing historical braking distance) of each of the historical response samples.

Step 523: searching for, based on description parameters for a set actuator response model (i.e., an actuator response mode), a parameter combination in a preset parameter range, and determining a fitted braking distance under the parameter combination.

Step 524: determining a parameter combination, that is, an optimal parameter combination (namely, target parameters), having a smallest error relative to the ego vehicle braking distance of each of the historical response samples.

Step 525: outputting a fitted actuator response model based on the optimal parameter combination.

In this embodiment, an actuator response model of the vehicle in each speed section is fitted through an actual historical response sample of the vehicle, so that each actuator response model may more effectively characterize a real actuator response behavior of the vehicle in a corresponding speed section, thereby further improving the accuracy and the effectiveness of an active safety trigger state of the vehicle when the actuator response model is used for the active safety trigger state.

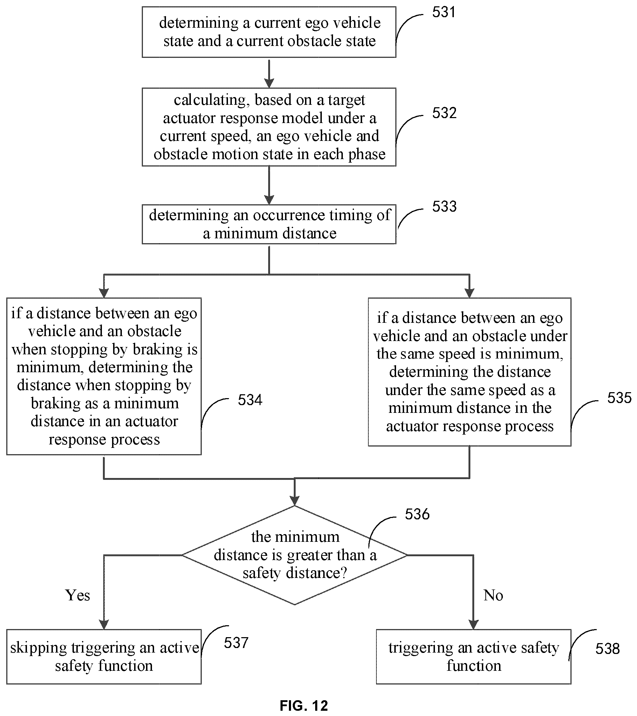

In some optional embodiments, FIG. 12 is a flow block diagram illustrating determining of an active safety trigger state according to an exemplary embodiment of the present disclosure. As shown in FIG. 12, a process of determining the active safety trigger state may include the following steps:

Step 531: determining a current ego vehicle state and a current obstacle state.

Step 532: calculating, based on a target actuator response model under a current speed, an ego vehicle and obstacle motion state in each phase.

Step 533: determining an occurrence timing of a minimum distance.

Step 534: if a distance between an ego vehicle and an obstacle when stopping by braking is minimum, determining the distance when stopping by braking as a minimum distance in an actuator response process.

Step 535: if a distance between an ego vehicle and an obstacle under the same speed is minimum, determining the distance under the same speed as a minimum distance in the actuator response process.

Step 536: determining whether the minimum distance is greater than a safety distance (for example, a safety distance threshold).

Step 537: if the minimum distance is greater than the safety distance, determining that an active safety function does not need to be triggered, in other words, the active safety trigger state represents "non-triggered".

Step 538: if the minimum distance is not greater than the safety distance, determining that an active safety function needs to be triggered, in other words, the active safety trigger state represents "triggered".

In the method according to this embodiment of the present disclosure, a determining basis for a more reliable trigger timing may be provided for the active safety control based on an actual response characteristic of an actuator of a vehicle, and response samples of the actuator may be continuously accumulated with traveling of the vehicle, to update and optimize an actuator response mode in each speed section based on a latest response sample, so that a trigger timing of the active safety function may be adjusted, and adaptive adjustment of the trigger timing may be realized based on the actual performance of the actuator, so that the vehicle may effectively and adaptively determine a most reasonable trigger timing conforming to the performance of the ego vehicle. In this way, the robustness of the active safety function may be effectively improved, and safer driving experience may be provided for a driver. The trigger timing of the active safety function may include a braking trigger timing of automatic emergency braking and an alarm timing of auxiliary alarming. Moreover, the case of the minimum distance under the same speed and the case of the minimum distance when stopping by braking may be both considered, thereby effectively improving the accuracy of the minimum distance. Occurrence of a case in which an inaccurate active safety trigger state is caused by directly determining the active safety trigger state based on a distance when stopping by braking is avoided.

The foregoing embodiments of the present disclosure may be implemented separately or in any combination without a conflict, and a specific setting may be provided based on actual needs. This is not limited in the present disclosure.

Any active safety control method for vehicle traveling provided by the embodiments of the present disclosure may be performed by any appropriate device, including but not limited to a terminal device and a server, that has a data processing capability. Alternatively, any active safety control method for vehicle traveling provided by the embodiments of the present disclosure may be performed by a processor, for example, the processor executes any active safety control method for vehicle traveling mentioned by the embodiments of the present disclosure by invoking corresponding instructions stored in a memory. Details are not described below.

## Exemplary apparatus

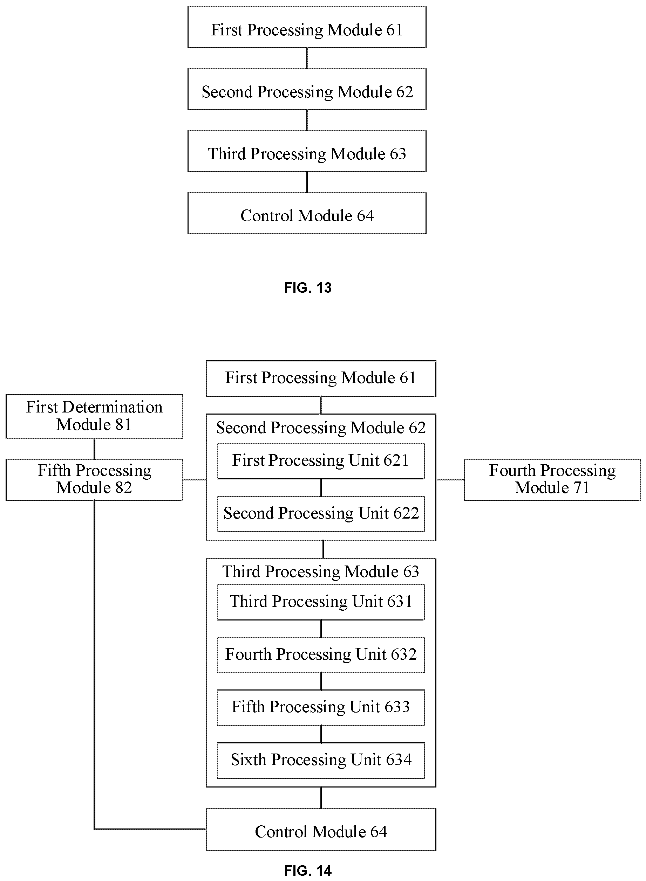

FIG. 13 is a schematic diagram illustrating a structure of an active safety control apparatus for vehicle traveling according to an exemplary embodiment of the present disclosure. The apparatus of this embodiment may be configured for implementing a corresponding method embodiment of the present disclosure. As shown in FIG. 13, the apparatus may include a first processing module 61, a second processing module 62, a third processing module 63, and a control module 64.

The first processing module 61 may be configured for determining a current ego vehicle state of a vehicle and a current obstacle state perceived by the vehicle.

The second processing module 62 may be configured for determining a target actuator response mode corresponding to a current speed of the vehicle.

The third processing module 63 may be configured for determining an active safety trigger state of the vehicle in the target actuator response mode based on the current ego vehicle state and the current obstacle state.

The control module 64 may be configured for performing active safety control on the vehicle based on the active safety trigger state.

FIG. 14 is a schematic diagram illustrating a structure of an active safety control apparatus for vehicle traveling according to another exemplary embodiment of the present disclosure.

In some optional embodiments, as shown in FIG. 14, the second processing module 62 may include:

a first processing unit 621, which may be configured for determining a target speed section corresponding to a current speed; and
a second processing unit 622, which may be configured for determining, based on the target speed section, a target actuator response mode from actuator response modes respectively corresponding to the different speed sections.

In some optional embodiments, as shown in FIG. 14, the apparatus of this embodiment of the present disclosure may further include a fourth processing module 71.

The fourth processing module 71 may be configured for obtaining the target actuator response mode by: acquiring, for the target speed section to which the current speed belongs, a historical response sample of a vehicle traveling at a speed within the target speed section, where the historical response sample includes historical actuator response information and a historical ego vehicle state; and determining, based on the historical actuator response information and the historical ego vehicle state of the historical response sample, the target actuator response mode corresponding to the target speed section.

In some optional embodiments, the fourth processing module 71 may be specifically configured for determining, based on the historical actuator response information and the historical ego vehicle state, a historical braking distance of an actuator response process corresponding to the historical response sample; determining, based on the historical ego vehicle state of the historical response sample, an initial ego vehicle speed and an initial ego vehicle acceleration corresponding to the historical response sample in an actuator response mode for the target speed section; determining, based on the initial ego vehicle speed, the initial ego vehicle acceleration, and the historical braking distance that correspond to the historical response sample and a preset parameter range of the actuator response mode, target parameters for the actuator response mode corresponding to the target speed section; and determining, based on the target parameters for the actuator response mode corresponding to the target speed section, the target actuator response mode corresponding to the target speed section.

In some optional embodiments, the fourth processing module 71 may be specifically configured for determining, based on the initial ego vehicle speed, the initial ego vehicle acceleration, and the historical braking distance that correspond to the historical response sample and through performing searching within the preset parameter range by a least squares method, the target parameters for the actuator response mode corresponding to the target speed section.

In some optional embodiments, the fourth processing module 71 vehicle may be specifically configured for: for a current-searching-based obtained parameter, determining, based on the initial ego vehicle speed and the initial ego vehicle acceleration that correspond to the historical response sample, a fitted braking distance corresponding to the historical response sample under the current-searching-based obtained parameter; and determining, based on the historical braking distance and the fitted braking distance that correspond to the historical response sample and the current-searching-based obtained parameter, the target parameters for the actuator response mode corresponding to the target speed section.

In some optional embodiments, the fourth processing module 71 vehicle may be specifically configured for determining, based on the current-searching-based obtained parameter, a current delay time in a delay phase, a current pressure-building rate in a pressure-building phase, and a current average deceleration in a pressure-holding phase of the actuator response process; determining, based on the initial ego vehicle speed and the initial ego vehicle acceleration that correspond to the historical response sample, the current delay time, the current pressure-building rate, and the current average deceleration, a first braking distance in the delay phase, a second braking distance in the pressure-building phase, and a third braking distance in the pressure-holding phase of the historical response sample; and determining, based on the first braking distance, the second braking distance, and the third braking distance, the fitted braking distance corresponding to the historical response sample under the current-searching-based obtained parameter.

In some optional embodiments, as shown in FIG. 14, the apparatus of this embodiment of the present disclosure may further include:

> a first determination module 81, which may be configured for determining a new response sample corresponding to the current speed, where the new response sample includes new actuator response information and a new ego vehicle state; and
> a fifth processing module 82, which may be configured for updating, based on the new response sample, the target actuator response mode corresponding to the current speed to obtain an updated target actuator response mode.

In some optional embodiments, as shown in FIG. 14, the third processing module 63 may include:

> a third processing unit 631, which may be configured for determining, based on the current ego vehicle state and the current obstacle state, a predicted ego vehicle state and a predicted obstacle state that correspond to each of phases in an actuator response process;
> a fourth processing unit 632, which may be configured for determining, based on the predicted ego vehicle states and the predicted obstacle states corresponding to the respective phases, a vehicle and obstacle movement state;
> a fifth processing unit 633, which may be configured for determining, based on the vehicle and obstacle motion state, a minimum distance between the vehicle and the obstacle in the actuator response process; and
> a sixth processing unit 634, which may be configured for determining an active safety trigger state based on the minimum distance and a safety distance threshold.

For beneficial technical effects corresponding to the exemplary apparatus embodiment, references may be made to corresponding beneficial technical effects of the foregoing exemplary method part. Details are not described herein.

## Exemplary Electronic Device

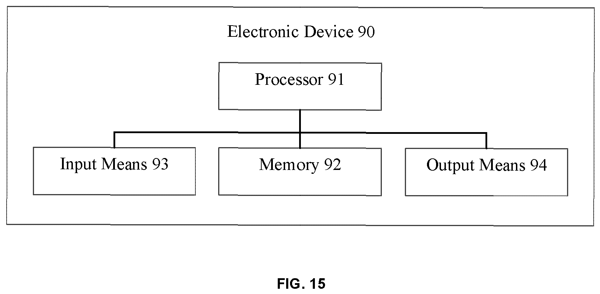

FIG. 15 is a diagram illustrating a structure of an electronic device 90 according to an embodiment of the present disclosure, including at least one processor 91 and a memory 92.

The processor 91 may be a central processing unit (CPU) or another form of processing unit with a data processing capability and/or an instruction execution capability, and may control other components in the electronic device 90 to perform desired functions.

The memory 92 may include one or more computer program products. The computer program product may include various forms of computer readable storage media, for example, a volatile memory and/or a nonvolatile memory. The volatile memory may include, for example, a random access memory (RAM) and/or a cache. The nonvolatile memory may include, for example, a read-only memory (ROM), a hard disk drive, a flash memory, and the like. One or more computer program instructions may be stored on the computer readable storage medium, and the processor 91 may execute the one or more computer program instructions, to implement the methods and/or other desired functions of the embodiments of the present disclosure in the foregoing.

In an example, the electronic device 90 may further include an input apparatus 93 and an output apparatus 94, where these components are interconnected through a bus system and/or another form of connection mechanism (not shown).

The input apparatus 93 may further include, for example, a keyboard, a mouse, and the like.

The output apparatus 94 may output various information to the outside, which may include, for example, a display, a speaker, a printer, and a communication network and a remote output means connected thereto.

Certainly, for simplicity, only some components related to the present disclosure in the electronic device 90 are shown in FIG. 15, and components such as a bus and an input/output interface are omitted. Besides, according to a specific application status, the electronic device 90 may further include any other appropriate components.

## Exemplary Computer Program Product And Computer-Readable Storage Medium

In addition to the foregoing methods and devices, embodiments of the present disclosure may further provide a computer program product including computer program instructions. When executed by a processor, the computer program instructions cause the processor to perform the steps in the methods of various embodiments of the present disclosure described in the forgoing "exemplary method" part.

The computer program product may write program code for performing the operations of the embodiments of the present disclosure in any combination of one or more programming design languages, where the programming design languages include an object-oriented programming design language, for example, Java or C++, and further include a conventional procedural programming design language, for example, a "C" language or a similar programming design language. The program code may be completely executed on a user computing device, partially executed on a user device, executed as an independent software package, partially executed on the user computing device and partially executed on a remote computing device, or completely executed on the remote computing device or a server.

Furthermore, an embodiment of the present disclosure may further be a computer readable storage medium, storing computer program instructions. When executed by a processor, the computer program instructions cause the processor to perform the steps in the methods of various embodiments of the present disclosure described in the foregoing "exemplary method" part.

The computer readable storage medium may adopt any combination of one or more readable media. The readable medium may be a readable signal medium or a readable storage medium. The readable storage medium is, for example, but is not limited to, a system, an apparatus, or a device including electricity, magnetism, light, electromagnetism, infrared, or semiconductor, or any combination thereof. More specific examples (a non-exhaustive list) of readable storage media include: an electrical connection with one or more wires, a portable disk, a hard disk drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

The basic principles of the present disclosure are described above in combination with specific embodiments. However, the benefits, advantages, effects, and the like mentioned in the present disclosure are only examples rather than limitations, and should not be considered to be necessary for the embodiments of the present disclosure. Moreover, the specific details disclosed above are for exemplary purposes and easy of understanding only, but not for limitation, and the above details do not limit the present disclosure to be implemented by the specific details described above.

Various modifications and variations may be made to the present disclosure by a person skilled in the art without departing from the spirit and the scope of this application. In this way, the present disclosure is intended to cover these modifications and variations of this application provided that they fall within the scope of protection defined by the claims of the present disclosure and their equivalent technologies.

**Claims**

1. An active safety control method for vehicle traveling, **characterized by** comprising:

   determining (201) a current ego vehicle state of a vehicle and a current obstacle state perceived by the vehicle;
   determining (202) a target actuator response mode corresponding to the vehicle under a current speed;
   determining (203), based on the current ego vehicle state and the current obstacle state, an active safety trigger state of the vehicle in the target actuator response mode; and
   performing (204) active safety control on the vehicle based on the active safety trigger state.

2. The method according to claim 1, wherein the determining (202) a target actuator response mode corresponding to the vehicle under a current speed comprises:

   determining (2021) a target speed section corresponding to the current speed; and
   determining (2022), based on the target speed section, the target actuator response mode from actuator response modes respectively corresponding to different speed sections.

3. The method according to claim 1, wherein the target actuator response mode is obtained by:

   acquiring (301), for a target speed section to which the current speed belongs, a historical response sample of the vehicle traveling at a speed within the target speed section, wherein the historical response sample comprises historical actuator response information and a historical ego vehicle state; and
   determining (302), based on the historical actuator response information and the historical ego vehicle state of the historical response sample, the target actuator response mode corresponding to the target speed section.

4. The method according to claim 3, wherein the determining (302), based on the historical actuator response information and the historical ego vehicle state of the historical response sample, the target actuator response mode corresponding to the target speed section comprises:

   determining (3021), based on the historical actuator response information and the historical ego vehicle state, a historical braking distance of an actuator response process corresponding to the historical response sample;
   determining (3022), based on the historical ego vehicle state of the historical response sample, an initial ego vehicle speed and an initial ego vehicle acceleration corresponding to the historical response sample in an actuator response mode for the target speed section;
   determining (3023), based on the initial ego vehicle speed, the initial ego vehicle acceleration, and the historical braking distance that correspond to the historical response sample and a preset parameter range of the actuator response mode, target parameters for the actuator response mode corresponding to the target speed section; and
   determining (3024), based on the target parameters for the actuator response mode corresponding to the target speed section, the target actuator response mode corresponding to the target speed section.

5. The method according to claim 4, wherein the determining (3023), based on the initial ego vehicle speed, the initial ego vehicle acceleration, and the historical braking distance that correspond to the historical response sample and a preset parameter range of the actuator response mode, target parameters for the actuator response mode corresponding to the target speed section comprises:
   determining, based on the initial ego vehicle speed, the initial ego vehicle acceleration, and the historical braking distance that correspond to the historical response sample and through performing searching within the preset parameter range by a least squares method, the target parameters for the actuator response mode corresponding to the target speed section.

6. The method according to claim 5, wherein the determining, based on the initial ego vehicle speed, the initial ego vehicle acceleration, and the historical braking distance that correspond to the historical response sample and through performing searching within the preset parameter range by a least squares method, the target parameters for the actuator response mode corresponding to the target speed section comprises:

   for a current-searching-based obtained parameter, determining, based on the initial ego vehicle speed and the initial ego vehicle acceleration that correspond to the historical response sample, a fitted braking distance corresponding to the historical response sample under the current-searching-based obtained parameter; and

determining, based on the historical braking distance and the fitted braking distance that correspond to the historical response sample and the current-searching-based obtained parameter, the target parameters for the actuator response mode corresponding to the target speed section.

7. The method according to claim 6, wherein the determining, based on the initial ego vehicle speed and the initial ego vehicle acceleration that correspond to the historical response sample, a fitted braking distance corresponding to the historical response sample under the current-searching-based obtained parameter comprises:

determining, based on the current-searching-based obtained parameter, a current delay time in a delay phase, a current pressure-building rate in a pressure-building phase, and a current average deceleration in a pressure-holding phase of the actuator response process;
determining, based on the initial ego vehicle speed and the initial ego vehicle acceleration that correspond to the historical response sample, the current delay time, the current pressure-building rate, and the current average deceleration, a first braking distance in the delay phase, a second braking distance in the pressure-building phase, and a third braking distance in the pressure-holding phase of the historical response sample; and
determining, based on the first braking distance, the second braking distance, and the third braking distance, the fitted braking distance corresponding to the historical response sample under the current-searching-based obtained parameter.

8. The method according to any one of claims 1 to 7, wherein after the performing (204) active safety control on the vehicle based on the active safety trigger state, the method further comprises:

determining (401) a new response sample corresponding to the current speed, wherein the new response sample comprises new actuator response information and a new ego vehicle state; and
updating (402), based on the new response sample, the target actuator response mode corresponding to the current speed to obtain an updated target actuator response mode.

9. The method according to any one of claims 1 to 7, wherein the determining (203), based on the current ego vehicle state and the current obstacle state, an active safety trigger state of the vehicle in the target actuator response mode comprises:

determining (2031), based on the current ego vehicle state and the current obstacle state, a predicted ego vehicle state and a predicted obstacle state that correspond to each of phases in the actuator response process;
determining (2032), based on the predicted ego vehicle states and the predicted obstacle states corresponding to the respective phases, a vehicle and obstacle motion state;
determining (2033), based on the vehicle and obstacle motion state, a minimum distance between the vehicle and an obstacle in the actuator response process; and
determining (2034) the active safety trigger state based on the minimum distance and a safety distance threshold.

10. An active safety control apparatus for vehicle traveling, **characterized by** comprising:

a first processing module (61), configured for determining a current ego vehicle state of a vehicle and a current obstacle state perceived by the vehicle;
a second processing module (62), configured for determining a target actuator response mode corresponding to the vehicle under a current speed;
a third processing module (63), configured for determining, based on the current ego vehicle state and the current obstacle state, an active safety trigger state of the vehicle in the target actuator response mode; and
a control module (64), configured for performing active safety control on the vehicle based on the active safety trigger state.

11. The apparatus according to claim 10, further comprising a fourth processing module (71) configured for:

acquiring, for a target speed section to which the current speed belongs, a historical response sample of the vehicle traveling at a speed within the target speed section, wherein the historical response sample comprises historical actuator response information and a historical ego vehicle state; and
determining, based on the historical actuator response information and the historical ego vehicle state of the historical response sample, the target actuator response mode corresponding to the target speed section.

**12.** The apparatus according to claim 11, wherein the fourth processing module (71) determines, based on the historical actuator response information and the historical ego vehicle state of the historical response sample, the target actuator response mode corresponding to the target speed section by:

> determining, based on the historical actuator response information and the historical ego vehicle state, a historical braking distance of an actuator response process corresponding to the historical response sample;
>
> determining, based on the historical ego vehicle state of the historical response sample, an initial ego vehicle speed and an initial ego vehicle acceleration corresponding to the historical response sample in an actuator response mode for the target speed section;
>
> determining, based on the initial ego vehicle speed, the initial ego vehicle acceleration, and the historical braking distance that correspond to the historical response sample and a preset parameter range of the actuator response mode, target parameters for the actuator response mode corresponding to the target speed section; and
>
> determining, based on the target parameters for the actuator response mode corresponding to the target speed section, the target actuator response mode corresponding to the target speed section.

**13.** The apparatus according to claim 12, wherein the fourth processing module (71) determines, based on the initial ego vehicle speed, the initial ego vehicle acceleration, and the historical braking distance that correspond to the historical response sample and a preset parameter range of the actuator response mode, target parameters for the actuator response mode corresponding to the target speed section by: determining, based on the initial ego vehicle speed, the initial ego vehicle acceleration, and the historical braking distance that correspond to the historical response sample and through performing searching within the preset parameter range by a least squares method, the target parameters for the actuator response mode corresponding to the target speed section.

**14.** A non-transitory computer readable storage medium, on which a computer program is stored, **characterized by** that the computer program, when executed by a processor, causes the processor to implement the method according to any one of claims 1 to 9.

**15.** An electronic device (90), **characterized by** comprising:

a processor (91); and
a memory (92) configured for storing instructions executable by the processor (91), wherein the processor (91) is configured for reading the executable instructions from the memory and executing the instructions to implement the method according to any one of claims 1 to 9.

FIG. 1

| | |
|---|---|
| determining a current ego vehicle state of a vehicle and a current obstacle state perceived by the vehicle | 201 |
| determining a target actuator response mode corresponding to the vehicle under a current speed | 202 |
| determining, based on the current ego vehicle state and the current obstacle state, an active safety trigger state of the vehicle in the target actuator response mode | 203 |
| performing active safety control on the vehicle based on the active safety trigger state | 204 |

FIG. 2

determining a current ego vehicle state of a vehicle and a current obstacle state perceived by the vehicle — 201

determining a target speed section corresponding to a current speed — 2021

determining, based on the target speed section, a target actuator response mode from actuator response modes respectively corresponding to different speed sections — 2022

determining, based on the current ego vehicle state and the current obstacle state, an active safety trigger state of the vehicle in the target actuator response mode — 203

performing active safety control on the vehicle based on the active safety trigger state — 204

**FIG. 3**

acquiring, for a target speed section to which a current speed belongs, a historical response sample of a vehicle traveling at a speed within the target speed section — 301

determining, based on historical actuator response information and a historical ego vehicle state of the historical response sample, a target actuator response mode corresponding to the target speed section — 302

**FIG. 4**

acquiring, for a target speed section to which a current speed belongs, a historical response sample of a vehicle traveling at a speed within the target speed section —— 301

determining, based on historical actuator response information and a historical ego vehicle state, a historical braking distance of an actuator response process corresponding to the historical response sample —— 3021

determining, based on the historical ego vehicle state of the historical response sample, an initial ego vehicle speed and an initial ego vehicle acceleration corresponding to the historical response sample in an actuator response mode for the target speed section —— 3022

determining, based on the initial ego vehicle speed, the initial ego vehicle acceleration, and the historical braking distance that correspond to the historical response sample and a preset parameter range of the actuator response mode, target parameters for the actuator response mode corresponding to the target speed section —— 3023

determining, based on the target parameters for the actuator response mode corresponding to the target speed section, a target actuator response mode corresponding to the target speed section —— 3024

FIG. 5

determining a current ego vehicle state of a vehicle and a current obstacle state perceived by the vehicle —— 201

determining a target actuator response mode corresponding to the vehicle under a current speed —— 202

determining, based on the current ego vehicle state and the current obstacle state, an active safety trigger state of the vehicle in the target actuator response mode —— 203

performing active safety control on the vehicle based on the active safety trigger state —— 204

determining a new response sample corresponding to the current speed, where the new response sample includes new actuator response information and a new ego vehicle state —— 401

updating, based on the new response sample, the target actuator response mode corresponding to the current speed to obtain an updated target actuator response mode —— 402

FIG. 6

determining a current ego vehicle state of a vehicle and a current obstacle state perceived by the vehicle ⟋ 201

determining a target actuator response mode corresponding to the vehicle under a current speed ⟋ 202

determining, based on the current ego vehicle state and the current obstacle state, a predicted ego vehicle state and a predicted obstacle state that correspond to each of phases in an actuator response process ⟋ 2031

determining, based on the predicted ego vehicle states and the predicted obstacle states corresponding to the respective phases, a vehicle and obstacle motion state ⟋ 2032

determining, based on the vehicle and obstacle motion state, a minimum distance between the vehicle and an obstacle in the actuator response process ⟋ 2033

determining an active safety trigger state based on the minimum distance and a safety distance threshold ⟋ 2034

performing active safety control on the vehicle based on the active safety trigger state ⟋ 204

**FIG. 7**

Delay Phase

Pressure-Building Phase

Pressure-Holding Phase

t

**FIG. 8**

recording data — 501

determining an ego
vehicle state — 503

actuator response mode
fitting — 502

visually perceiving an
obstacle state — 504

determining an active
safety trigger state — 505

state machine — 506

active safety control — 507

**FIG. 9**

511

triggering data acquisition if
a rising edge signal of an
actuator response is
observed

512

recording a start frame of
the actuator response

513

recording ego vehicle state
data in an actuator response
process

514

recording obstacle state data
perceived in the actuator
response process

515

a falling edge of
the actuator response
observed?

No

Yes

516

recording an end frame of
the actuator response, and
ending the acquisition

FIG. 10

acquiring historical response samples obtained through data acquisition in respective speed sections — 521

↓

calculating an ego vehicle braking distance of each of the historical response samples — 522

↓

searching for, based on description parameters for a set actuator response model, for a parameter combination in a preset parameter range, and determining a fitted braking distance under the parameter combination — 523

↓

determining a parameter combination, that is, an optimal parameter combination, having a smallest error relative to the ego vehicle braking distance of each of the historical response samples — 524

↓

outputting a fitted actuator response model based on the optimal parameter combination — 525

FIG. 11

determining a current ego vehicle state and a current obstacle state — 531

calculating, based on a target actuator response model under a current speed, an ego vehicle and obstacle motion state in each phase — 532

determining an occurrence timing of a minimum distance — 533

if a distance between an ego vehicle and an obstacle when stopping by braking is minimum, determining the distance when stopping by braking as a minimum distance in an actuator response process — 534

if a distance between an ego vehicle and an obstacle under the same speed is minimum, determining the distance under the same speed as a minimum distance in the actuator response process — 535

the minimum distance is greater than a safety distance? — 536

Yes

No

skipping triggering an active safety function — 537

triggering an active safety function — 538

**FIG. 12**

First Processing Module 61

Second Processing Module 62

Third Processing Module 63

Control Module 64

**FIG. 13**

First Determination Module 81

Fifth Processing Module 82

First Processing Module 61

Second Processing Module 62

First Processing Unit 621

Second Processing Unit 622

Fourth Processing Module 71

Third Processing Module 63

Third Processing Unit 631

Fourth Processing Unit 632

Fifth Processing Unit 633

Sixth Processing Unit 634

Control Module 64

**FIG. 14**

Electronic Device 90

Processor 91

Input Means 93 | Memory 92 | Output Means 94

FIG. 15